Europäisches Patentamt

European Patent Office

Office européen des brevets

(19)

(11) Veröffentlichungsnummer: **0 144 520**
A2

(12) **EUROPÄISCHE PATENTANMELDUNG**

(21) Anmeldenummer: **84109463.4**

(51) Int. Cl.⁴: **F 16 J 9/20**

(22) Anmeldetag: **09.08.84**

(30) Priorität: **03.11.83 DE 3339708**

(43) Veröffentlichungstag der Anmeldung:
**19.06.85 Patentblatt 85/25**

(84) Benannte Vertragsstaaten:
**DE FR GB IT**

(71) Anmelder: **GOETZE AG**
**Bürgermeister-Schmidt-Strasse 17**
**D-5093 Burscheid 1(DE)**

(72) Erfinder: **Morsbach, Martin, Dr.**
**Finkenweg 16**
**D-5093 Burscheid(DE)**

(72) Erfinder: **Brauers, Bert, Dr.**
**Hauptstrasse 35**
**D-5068 Blecher-Odenthal(DE)**

(54) Ölabstreif-Kolbenringsystem.

(57) Bei einem axial extrem niedrig bauenden zweiteiligen Ölabstreif-Kolbenringsystem besteht der Ölabstreifring aus einem niedrigen Stahlbandring und der Federring aus einem ebenfalls niedrigen Federbandmaterial. Beide Materialstärken sind etwa gleich.

FIG. 5

EP 0 144 520 A2

Croydon Printing Company Ltd.

- 1 -

### Ölabstreif-Kolbenringsystem.

Die Erfindung betrifft ein Ölabstreif-Kolbenringsystem, bestehend aus einem in einer Nut eines Kolbens angeordneten, an der oberen (brennraumseitigen) Nutflanke zumindest teilweise anliegenden Ölabstreifring und einem im wesentlichen unterhalb desselben sich erstreckenden, mit alternierenden radialen Einschnitten versehenen Federring, der am Innenumfang ganz oder teilweise, sich hinter den Ölabstreifring erstreckend, abgebogen ist.

Durch die DE-OS 2.023.850 ist bereits ein Ölabstreifring für Kolben bekannt. Das Ringsystem ist zweiteilig ausgebildet, wobei der Ölabstreifring aus einem im Querschnitt rechteckigen, axial relativ hohen Metallkörper besteht. Eine aus einem Stahlstreifen bestehende Feder weist alternierende Einschnitte auf und ist winkelförmig abgebogen. Durch Axialkraftkomponenten der Feder wird der Metallkörper an eine Nutflanke angedrückt, wobei sich die Feder an der gegenüberliegenden Nutflanke abstützt.

Ferner ist der DE-PS 1.232.419 eine mehrteilige Kolbenringanordnung zum Einsetzen in eine Kolbenringnut zu entnehmen. Der Federring weist hierbei an seinem Außenumfang abwärts gerichtete Zungen auf, die mit dem Außenumfang eines in Richtung des Nutgrundes weisenden unteren Kolbenringes in Berührung stehen. Der Federring ist im unbelasteten Zustand vertwistet. An unteren, am Innenumfang des Federringes vorgesehenen Abbiegungen liegt ein weiterer Kolbenring an, der mit der korrespondierenden Zylinderwand zusammenwirkt.

Die Motorenindustrie strebt seit langem zur Reduzierung der mechanischen Verlustleistung unter anderem eine Reduzierung der Kolbenbauhöhe an. Die Ringfeldhöhe des Kolbens kann hierbei am ehesten über eine Reduzierung der axialen Gesamthöhe des Ölabstreifringes verringert werden. Eine derartige Reduzierung der axialen Bauhöhe bei gleichzeitigen guten Abdichteigenschaften ist weder durch dreiteilige (relativ niedrige) Systeme noch durch zweiteilige, axial relativ hochbauende Metallkörper realisierbar.

Der Erfindung liegt daher die Aufgabe zugrunde, durch gezielte Modifizierung des Standes der Technik ein Ölabstreif-Kolbenringsystem zu schaffen, welches axial extrem niedrig baut, bei gleichzeitig guten Abdichteigenschaften und weicher Federkennung des Federringes.

Diese Aufgabe wird erfindungsgemäß gelöst durch die Kombination folgender, an sich bekannter Merkmale:

a. der Ölabstreifring besteht aus einem axial relativ niedrigen Stahlbandring,

b. der Federring besteht aus einem ebenfalls axial relativ niedrigen Federbandmaterial,

c. die Materialstärke sowohl des Stahlbandringes als

- 3 -

auch des Federringes sind etwa gleich.

Durch die gezielte Kombination bekannter Merkmale wird ein zweiteiliges Ölabstreif-Kolbenringsystem geschaffen, welches einer Reduzierung der Kolbenbauhöhe und somit der Verringerung der mechanischen Verlustleistung Rechnung trägt. Konventionelle Ringsysteme mit axialen Höhen von 3 bis 4 mm sind in zweiteiliger Ausführung nur bedingt funktionstüchtig, da sie, auf Nenndurchmesser gespannt, in der Kolbbennut vertwisten und dadurch klemmen, d. h. radial unbeweglich werden. Durch das erfindungsgemäße Ölabstreif-Kolbenringsystem sind demgegenüber Bauhöhen von 1,2 mm realisierbar. Mit diesem Ring dürfte die kleinstmögliche Höhe für federgestützte Ölabstreifringe erreicht sein.

Im Einbauzustand ist das Ölabstreif-Kolbenringsystem bestrebt, sich zu vertwisten. Bedingt durch unterschiedliche Hebelarme der einzelnen Kraftangriffspunkte im Verhältnis zueinander, ergibt sich eine unsymmetrische Krafteinleitung in das Gesamtsystem, wodurch ein axiales Klemmen vermieden wird.

Einem weiteren Gedanken der Erfindung gemäß, entspricht die axiale Höhe des abgebogenen Federringbereiches etwa der axialen Höhe (Materialstärke) des Stahlbandringes.

Bedingt durch die alternierenden Einschnitte werden am Federring Zungen gebildet, die unterhalb (ölraumseitig) des Stahlbandringes verlaufen. Um nun eine gezielte axia-

0144520

- 4 -

le Kraftkomponente in den Stahlbandring einzuleiten, wird vorgeschlagen, diese Zungen, in Umfangsrichtung gesehen, zumindest teilweise so auszubilden, daß sie unter einem spitzen Winkel in Richtung des Stahlbandringes verlaufen. Je nach Anforderung kann es sich als sinnvoll erweisen, die Zungen mit unterschiedlichen Winkeln zu versehen, um so am Umfang die Axialkraftkomponenten beeinflussen zu können. Der spitze Winkel, der hierbei zwischen den Zungen und der zugehörigen Nutflanke gebildet wird, soll, einem weiteren Merkmal der Erfindung gemäß, im Bereich von 5° bis 20° liegen.

Eine weitere vorteilhafte Ausbildung ist darin zu sehen, daß der abgebogene Bereich des Federringes zumindest teilweise unter einem Winkel in Richtung auf die gegenüberliegende Nutflanke, vom Stahlbandring wegweisend, verläuft. Durch diese Schräge wird die Vertwistung des Ölabstreif-Kolbenringsystemes verstärkt. Es kann sich im Betriebszustand nur noch so weit drehen, bis der unterhalb des Stahlbandringes angeordnete Bereich des Federringes, also die Zungen an der korrespondierenden Nutflanke, zur Anlage kommen.

Wie schon angesprochen, vertwistet das System im Einbauzustand in der Kolbennut. Daraus würde sich eine im wesentlichen linienförmige Berührung zwischen dem Federring und der zugehörigen Nutflanke, in Umfangsrichtung gesehen, einstellen. Nachteilig kann sich hier jedoch ein Eingraben des Federringes in die Nutflanke auswirken. Um dies zu umgehen, wird vorgeschlagen, den Übergang der

- 5 -

Zungen in dem abgebogenen Bereich des Federringes abzurunden. Durch diese Maßnahme wird der an sich positive Umstand der linienförmigen Berührung zwischen Federring und Nutflanke nahezu beibehalten. Mögliche Radien für die Abrundung erstrecken sich in einem Bereich von 0,4 bis 1,0 mm.

Einem weiteren Gedanken der Erfindung gemäß, besteht die Möglichkeit, den im wesentlichen axial abgebogenen Bereich des Federringes zumindest teilweise in radialer Richtung, vom Stahlbandring wegweisend, zu verlängern. Damit ist der Vorteil verbunden, daß neben der Reduzierung der axialen Gesamtbauhöhe sich zusätzlich eine weiche Federkennung einstellt, die nicht zuletzt dem Ziel eines möglichst geringen Tangentialkraftabfalles über die gesamte Laufzeit des Federringes dient. Um diesen Effekt noch zu stärken, wird weiterhin vorgeschlagen, den Biegebereich des Federringes im wesentlichen radial hinter dem Stahlbandring anzuordnen.

Des weiteren besteht die Möglichkeit, die radiale Verlängerung so auszubilden, daß sie parallel zu dem unterhalb des Stalhlbandringes liegenden Bereich des Federringes verläuft. Durch diese Maßnahme stellt sich ein Federring mit einem unsymmetrischen, etwa S-förmigen Querschnitt ein. Vorzugsweise beträgt das Längen-Höhen-Verhältnis dieser radialen Verlängerung etwa 2 : 1.

Die Erfindung ist in der Zeichnung dargestellt und wird im folgenden näher beschrieben. Es zeigen:

- 6 -

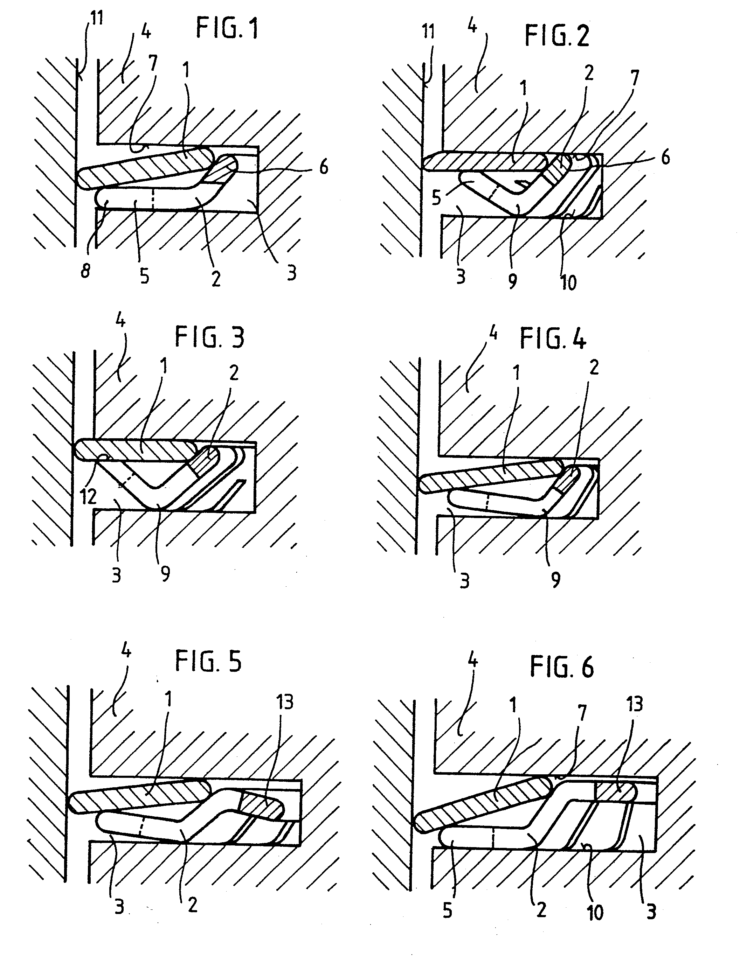

Figuren 1 bis 6  Unterschiedliche Ölabstreif-Kolbenringsysteme gemäß dem Erfindungsgedanken.

Die in den Figuren 1 bis 6 abgebildeten Ölabstreif-Kolbenringsysteme bestehen alle aus einem Ölabstreifring 1 aus Stahlbandmaterial sowie einem aus Federbandmaterial hergestellten Federring 2. Beide Elemente 1 und 2 sind von der Materialstärke her etwa gleich ausgebildet (ca. 0,5 mm ). Das System ist in der Nut 3 eines Kolbens 4 eingesetzt. Der Federring 2 ist mit alternierenden Einschnitten versehen, wodurch federnde Zungen 5,6 gebildet werden. Die Zungen 5 sind hierbei im wesentlichen unterhalb des Stahlbandringes 1 angeordnet, während die Zungen 6 im wesentlichen axial in Richtung auf die gegenüberliegende Nutflanke 7 abgebogen sind.

Der Federring 2 gemäß Figur 1 ist etwa L-förmig ausgebildet, wobei der abgebogene Bereich 6 unter einem Winkel verläuft. Der Stahlbandring stützt sich radial an diesem abgewinkelten Bereich 6 ab und vertwistet, bedingt durch die Schräge, dergestalt, daß er unter Linienberührung an der Nutflanke 7 sowie im Endbereich 8 des Federringes 2 zur Anlage kommt.

Figur 2 zeigt einen Federring 2, der etwa das Profil eines Bumerangs aufweist. Die Zungen 5 sind in Richtung auf den Stahlbandring 1 abgebogen und drücken diesen ganzflächig an die Nutflanke 7. Der Federring 2 ist im Bereich seiner Abstützstelle 9 an der Nutflanke 10  abgerundet ausgebildet. Die Zungen 6 drücken den Stahlbandring 1 radial gegen die Zylinderwand 11.

Figur 3 ist etwa analog zu Figur 2 zu sehen mit dem Unterschied, daß die Abstützbereiche 9 und 12 des Federringes 2 abgeflacht sind.

Figur 4 zeigt wiederum einen etwa L-förmigen Federring 2, bei dem die Zungen 5 unter einem Winkel von etwa 10° abgebogen sind. Der Radius des Abstützbereiches 9 beträgt etwa 1 mm.

Die Figuren 5 und 6 zeigen ein Ölabstreif-Kolbenringsystem, bei dem der Federring 2 einen etwa S-förmigen Querschnitt aufweist. Hierbei wurde ein System, wie es in der Figur 4 dargestellt ist, modifiziert. Die an den Zungen 6 sich anschließende radiale Verlängerung 13 dient dazu, die Federkennung des Federringes 2 weicher auszubilden, um so den Tangentialkraftabfall, über die gesamte Laufzeit gesehen, möglichst gering zu halten. Figur 5 zeigt hierbei die Einbausituation, wohingegen Figur 6 den Betriebszustand darstellt. Im Betriebszustand nämlich kippt das gesamte System infolge unsymmetrischer Krafteinleitung dergestalt, daß der gesamte untere Bereich 5 des Federringes 2 an der Nutflanke 10 zur Anlage kommt. Die Zungen 5 sowie die Verlängerung 13 sind vorzugsweise etwa parallel verlaufend ausgebildet, um eine Anlage an der Nutflanke 7 beim Kippen zu verhindern. Das Längen-Höhen-(Dicken-)-Verhältnis der Verlängerung 13 beträgt etwa 2:1, wobei die Verlängerung 13 radial kürzer ausgebildet sein soll als die den Stahlbandring 1 stützenden Zungen 5.

- 1 -

Patentansprüche:

1. Ölabstreif-Kolbenringsystem, bestehend aus einem in einer Nut eines Kolbens angeordneten, an der oberen (brennraumseitigen) Nutflanke zumindest teilweise anliegenden Ölabstreifring und einem im wesentlichen unterhalb desselben sich erstreckenden, mit alternierenden radialen Einschnitten versehenen Federring, der am Innenumfang, ganz oder teilweise sich hinter den Ölabstreifring erstreckend, abgebogen ist, gekennzeichnet durch die Kombination folgender, an sich bekannter Merkmale:

a. der Ölabstreifring (1) besteht aus einem axial relativ niedrigen Stahlbandring,

b. der Federring (2) besteht aus einem ebenfalls axial relativ niedrigen Federbandmaterial,

c. die Materialstärke sowohl des Stahlbandringes als auch des Federringes (2) sind etwa gleich.

2. Ölabstreif-Kolbenringsystem nach Anspruch 1, dadurch gekennzeichnet, daß die axiale Höhe des abgebogenen Bereiches (6) des Federringes (2) etwa der axialen Höhe des Stahlbandringes (1) entspricht.

3. Ölabstreif-Kolbenringsystem nach den Ansprüchen 1 und 2, dadurch gekennzeichnet, daß der unterhalb des Stahlbandringes (1) angeordnete Federringbereich (5) zumindest teilweise unter einem spitzen Winkel in Richtung auf den Stahlbandring (1) verläuft.

4. Ölabstreif-Kolbenringsystem nach den Ansprüchen 1 bis 3, dadurch gekennzeichnet, daß der Winkel zwischen dem unterhalb des Stahlbandringes (1) angeordneten Federringbereich (5) und der zugehörigen Nutflanke (10) im Bereich von 5 bis 20° liegt.

5. Ölabstreif-Kolbenringsystem nach den Ansprüchen 1 bis 4, dadurch gekennzeichnet, daß der abgebogene Bereich (6) des Federringes (2) zumindest teilweise unter einem Winkel in Richtung auf die gegenüberliegende Nutflanke (7) verläuft.

6. Ölabstreif-Kolbenringsystem nach den Ansprüchen 1 bis 5, dadurch gekennzeichnet, daß der Übergang (9) des unterhalb des Stahlbandringes (1) angeordneten Federringbereiches (5) in den abgebogenen Bereich (6) abgerundet ist.

7. Ölabstreif-Kolbenringsystem nach den Ansprüchen 1 bis 6, dadurch gekennzeichnet, daß der Radius der Rundung (9) im Bereich von 0,4 bis 1,0 mm liegt.

8. Ölabstreif-Kolbenringsystem nach den Ansprüchen 1 bis 7, dadurch gekennzeichnet, daß der abgebogene Bereich (6) des Federringes (2), zumindest teilweise radial von dem Stahlbandring (1) wegweisend, ver-

0144520

- 3 -

längert ist (13).

9. Ölabstreif-Kolbenringsystem nach den Ansprüchen 1 bis 8, dadurch gekennzeichnet, daß der Biegebereich des Federringes im wesentlichen radial hinter dem Stahlbandring angeordnet ist.

10. Ölabstreif-Kolbenringsystem nach den Ansprüchen 1 bis 9, dadurch gekennzeichnet, daß die radiale Verlängerung (13) etwa parallel zu dem unterhalb des Federringes (2) angeordneten Bereich (5) verläuft.

11. Ölabstreif-Kolbenringsystem nach den Ansprüchen 1 bis 10, dadurch gekennzeichnet, daß das Längen-Höhen-Verhältnis der radialen Verlängerung (13) etwa 2 : 1 beträgt.

FIG. 1

FIG. 2

FIG. 3

FIG. 4

FIG. 5

FIG. 6